# EUROPEAN PATENT APPLICATION

(11) **EP 4 761 077 A1**
(43) Date of publication of application: **17.06.2026**
(21) Application number: 24851859.9
(22) Date of filing: 06.08.2024
(51) Int. Cl.: H02K 15/02, H02K 1/30

(54) **POSITIONING METHOD AND JIG**

(30) Priority: 10.08.2023 JP 2023131661
(71) Applicant: NHK Spring Co., Ltd., Yokohama-shi, Kanagawa 236-0004 (JP)
(72) Inventor: HIROTA, Yuji, Yokohama-shi, Kanagawa 236-0004 (JP); SHIMADA, Satoru, Yokohama-shi, Kanagawa 236-0004 (JP)
(74) Representative: Oppermann, Frank
(86) International application number: PCT/JP2024/028115
(87) International publication number: WO 2025/033436

(57) **Abstract**

Provided is a positioning method and a jig, capable of accurately aligning phases of a plurality of iron core pieces. The positioning method for a rotor core 3 in which a plurality of core pieces 1 are stacked, the iron core pieces including key portions 9, relatively rotates a fixed contact portion 13 and a rotary contact portion 15 being respectively contactable with one sides and the other sides of the key portions 9 in the circumferential direction, relatively moves the key portions 9 in the circumferential direction between the fixed contact portion 13 and the rotary contact portion 15 by the relatively rotating, and respectively brings the fixed contact portion 13 and the rotary contact portion 15 into contact with the one side and the other side of the key portion 9 of each core piece 1 in the circumferential direction, to hold the key portions 9 between the fixed contact portion 13 and the rotary contact portion 15 to align the phases of the plurality of the core pieces 1 stacked.

## Description

### FIELD OF THE INVENTION

The present invention relates to a positioning method and a jig for aligning phases of a plurality of iron core pieces for forming a stacked iron core.

### BACKGROUND OF THE INVENTION

As a conventional positioning method, there is one to align phases of steel plates in a rotor core which is a stacked iron core formed by stacking the steel plates being a plurality of iron core pieces formed by pressing as disclosed in Patent Literature 1.

In this method, an insertion portion is loosely fitted into a center hole of the rotor core, and thereafter, the insertion portion is rotated about an axis with respect to the rotor core. As a result, one side face formed on the insertion portion is brought into contact with and presses key portions of the plurality of the steel plates of the rotor core in the circumferential direction, to align the key portions in the axial direction while rotating the plurality of the steel plates. In this way, the phases of the plurality of the steel plates are aligned to perform positioning of the steel plates.

In this positioning method, the steel plates are, however, stuck to each other by press oil or the like in some cases, and it is hard to avoid a phenomenon in which the stuck steel plates are co-rotated. With this co-rotation, it may be hard to perform the positioning for aligning the phases of the plurality of the steel plates.

### CITATION LIST

### PATENT LITERATURE

PATENT LITERATURE 1: JP 2021-136756 A

### SUMMARY OF THE INVENTION

### PROBLEMS TO BE SOLVED BY THE INVENTION

The problem to be solved is that it is hard to perform positioning for aligning phases of a plurality of stacked iron core pieces in some cases.

### MEANS FOR SOLVING THE PROBLEM

The present invention provides a positioning method for aligning phases of a plurality of iron core pieces in a stacked state, the iron core pieces including engagement portions in a circumferential direction. The positioning method relatively rotates a first contact portion and a second contact portion being respectively contactable with one sides and the other sides of the engagement portions in the circumferential direction, and relatively moves the engagement portions in the circumferential direction between the first and the second contact portions by the relatively rotating. Then, the first and the second contact portions are respectively brought into contact with the one side and the other side of the engagement portion of each iron core piece in the circumferential direction, to hold the engagement portions between the first and the second contact portions to align the phases of the plurality of the iron core pieces stacked.

The present invention also provides a jig for aligning phases of a plurality of iron core pieces in a stacked state, the iron core pieces including engagement portions in a circumferential direction and central holes. This jig is provided with a first and a second contact portions disposed so as to be coaxially rotatable relative to each other and fitted in the central holes of the plurality of the stacked iron core pieces in the axial direction, and a space portion to allow the relatively rotating of the first and the second contact portions while the engagement portions are disposed between the first and the second contact portions in the circumferential direction.

### EFFECT OF THE INVENTION

The present invention surely performs positioning for aligning phases of a plurality of stacked iron core pieces.

### BRIEF DESCRIPTION OF THE DRAWINGS

[FIG. 1] FIG. 1 is a perspective view of a rotor core according to an embodiment 1 of the present invention.
[FIG. 2] FIG. 2 is an enlarged plan view illustrating phase deviation around a center hole of the rotor core of FIG. 1.
[FIG. 3] FIG. 3 is an enlarged plan view illustrating the center hole and its periphery of the rotor core of FIG. 1 in a state that a jig is installed.
[FIG. 4] FIG. 4 is an enlarged plan view illustrating the center hole and its periphery of the rotor core of FIG. 1 in a positioning state using the jig.
[FIG. 5] FIG. 5 is a perspective view of the jig of FIG. 3.
[FIG. 6] FIG. 6 is a front view of the jig of FIG. 5.
[FIG. 7] FIG. 7 is a plan view of the jig of FIG. 5.
[FIG. 8] FIG. 8 is an enlarged front view illustrating part of the jig of FIG. 5.
[FIG. 9] FIG. 9 is an enlarged plan view illustrating part of the jig of FIG. 5.
[FIG. 10] FIG. 10 is an enlarged plan view illustrating a center hole and its periphery of a rotor core in which a jig is installed according to an embodiment 2 of the present invention.
[FIG. 11] FIG. 11 is an enlarged plan view illustrating the center hole and its periphery of the rotor core in a positioning state according to the embodiment 2 of the present invention.

### EMBODIMENT FOR CARRYING OUT THE INVENTION

The object of surely performing positioning for aligning phases of a plurality of stacked iron core pieces is accomplished by holding engagement portions of the plurality of the iron core pieces from both sides in a circumferential direction by first and second contact portions.

A positioning method aligns phases of a plurality of iron core pieces 1 in a stacked state, the iron core pieces including engagement portions 9 in a circumferential direction. This positioning method relatively rotates first and second contact portions 13 and 15 being respectively contactable with one sides and the other sides of the engagement portions 9 in the circumferential direction, and relatively moves the engagement portions 9 in the circumferential direction between the first and the second contact portions 13 and 15. Then, the positioning method respectively brings the first and the second contact portions 13 and 15 into contact with the one side and the other side of the engagement portion 9 of each iron core piece 1 in the circumferential direction, to hold the engagement portion 9 between the first and the second contact portions 13 and 15 to align the phases of the plurality of the iron core pieces 1 stacked.

The first and the second contact portions 13 and 15 may be provided so as to be coaxially rotatable relative to each other. In this case, the first and the second contact portions 13 and 15 may be installed in the plurality of the stacked iron core pieces 1 to be relatively coaxially rotated to be respectively brought into contact with the one side and the other side of the engagement portions 9 in the circumferential direction.

If the iron core pieces 1 are provided with center holes 5 in which the engagement portions 9 are projected inward in a radial direction, the first and the second contact portions 13 and 15 may perform the relatively rotating in a state of being fitted into the center holes 9.

One 15 of the first and the second contact portions 13 and 15 may be coupled to a shaft portion 23 serving as a center of the relatively rotating, and the other 13 of the first and the second contact portions 13 and 15 may be disposed around the shaft portion 23 and be movable along the radial direction within a range to allow the contact. In this case, the other 13 of the first and the second contact portions 13 and 15 may be pressed to the center holes 5 of the plurality of the stacked iron core pieces 1 based on a shape of the shaft portion 23 in the circumferential direction according to the relatively rotating, to position the plurality of the iron core pieces 1 in the radial direction.

A jig 17 used for the positioning method of the present invention may be provided with the first and the second contact portions 13 and 15, and a space portion 33. The space portion 33 allows the relatively rotating of the first and the second contact portions 13 and 15 while the engagement portions 9 are disposed between the first and the second contact portions 13 and 15 in the circumferential direction.

The jig 17 may include the shaft portion 23, one 15 of the first and the second contact portions 13 and 15 may be coupled to the shaft portion 23 serving as the center of the relatively rotating, and the other 13 of the first and the second contact portions 13 and 15 may be disposed relatively rotatably around the shaft portion 23.

### EMBODIMENT 1

### [Rotor core]

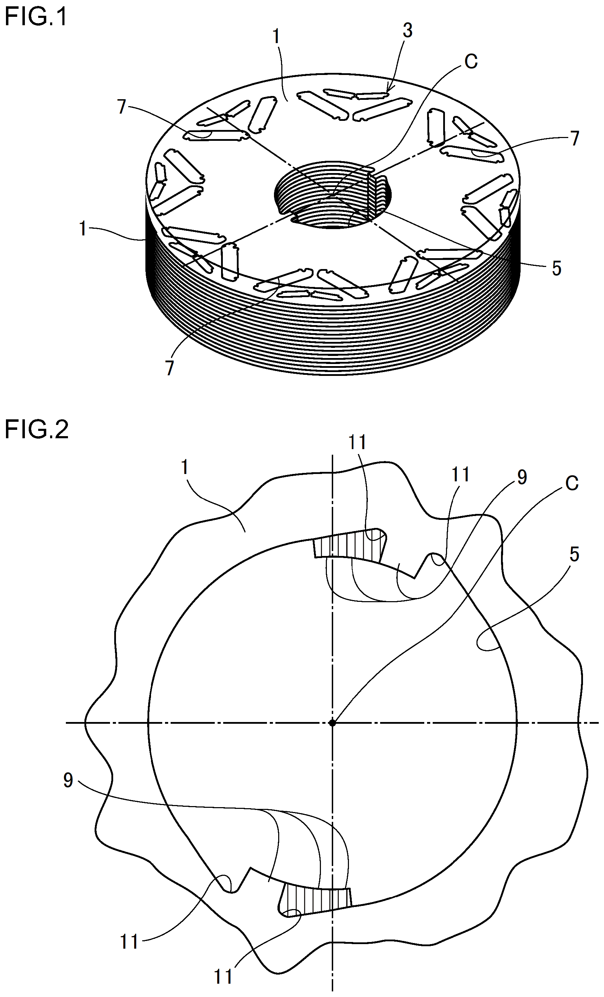

FIG. 1 is a perspective view of a rotor core according to the embodiment 1 of the present invention. FIG. 2 is an enlarged plan view illustrating phase deviation around a center hole of the rotor core of FIG. 1.

A rotor core 3 of FIG. 1 being a stacked iron core is a stack in which core pieces 1 being a plurality of iron core pieces are stacked in an axial direction and the core pieces 1 are not bonded to each other. It should be noted that a block in which a plurality of core pieces 1 are stacked may be a stacked iron core of the present invention. A plurality of the blocks are stacks to be stacked to each other to form the rotor core 3.

The core piece 1 is a plate body having a predetermined shape and being obtained by, for example, punching a silicon steel plate or the like by pressing. A planar shape of the core piece 1 is a ring shape, and the core piece includes hole portions such as magnet-housing holes 7 in addition to a center hole 5. The center hole 5 has a circular shape around a center C.

On an inner peripheral face of the center hole 5, a pair of key portions 9 being engagement portions of the present embodiment are provided to be projected inward in a radial direction. The radial direction is a direction along a diameter of the core piece 1. The pair of the key portions 9 are rectangular projections in a plan view, tips of which face each other in the radial direction across the center. The key portions 9 are allowed to be engaged with a jig 17 explained later in a circumferential direction according to the projecting inward in the radial direction from the inner peripheral face of the center hole 5. In principle, it is enough for one of the key portions 9 as the engagement portions. The circumferential direction is a circumferential direction around the center of the core piece 1.

On both sides of each key portion 9 in the circumferential direction, recessed portions 11 in the radial direction are formed on the inner periphery of the center hole 5. The recessed portions 11 expands the center hole 5 radially outward on both sides of the key portion 9.

In the rotor core 3, if the core pieces 1 are not joined together without caulking or the like, the plurality of the core pieces 1 may be deviated in phase and stacked. For this, the phase deviation of the core pieces 1 is corrected and then the other steps such as a magnet-housing step and a resin-molding step are performed. In addition, if a plurality of blocks are stacked, the blocks may be deviated in phase and stacked.

FIG. 2 is a stacked state in which the phases of the plurality of the core pieces 1 are deviated, and the key portions 9 of lower layers are shifted to one side in the circumferential direction with respect to the key portions 9 of an uppermost core piece 1. The phase deviation is, however, not limited to the state in FIG. 2, and there are various aspects in which the plurality of the core pieces 1 do not coincide with each other in the axial direction. For example, the key portions 9 of the lower layers may be shifted to both sides in the circumferential direction with respect to the uppermost core piece 1.

### [Positioning method]

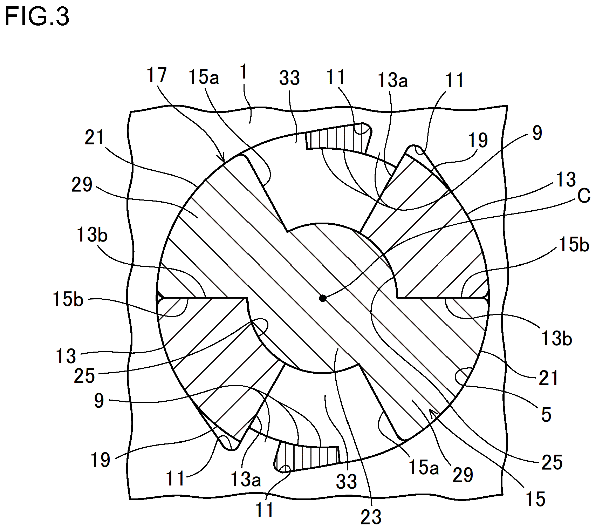

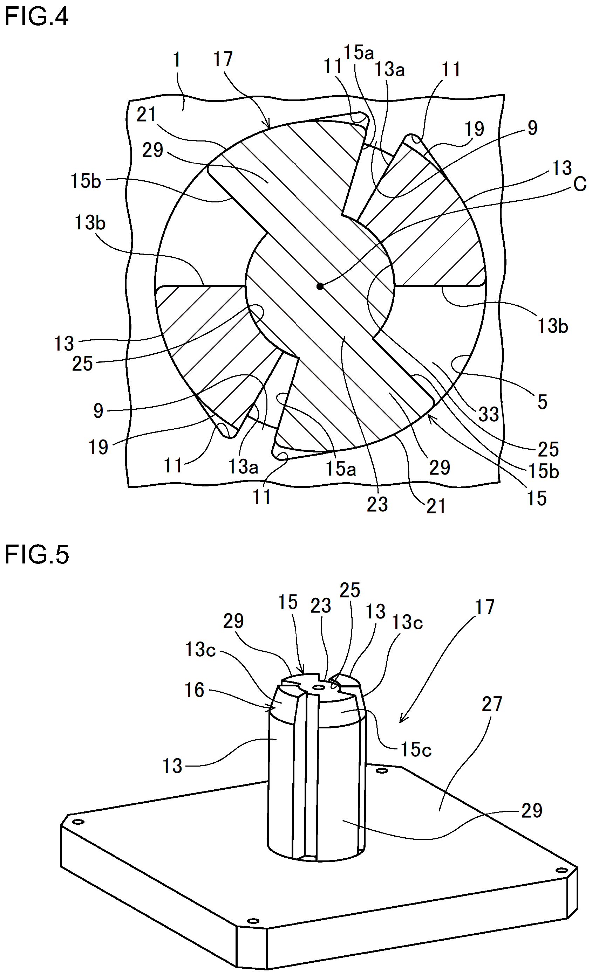

FIG. 3 is an enlarged plan view illustrating the center hole 5 and its periphery of the rotor core 3 of FIG. 1 in a state that a jig 17 is installed. FIG. 4 is an enlarged plan view illustrating the center hole 5 and its periphery of the rotor core 3 of FIG. 1 in a positioning state using the jig 17. In FIGS. 3 and 4, fixed contact portions 13 and rotary contact portions 15 are indicated by hatching for ease of understanding.

The positioning method of the present embodiment, as illustrated in FIGS. 3 and 4, performs positioning for aligning the phases of the plurality of the core pieces 1 in the stacked state, the core piece having the key portions 9 being the engagement portions in the circumferential direction on the inner periphery. The core piece to be positioned, however, may be, for example, a core piece of a stator core having a projecting portion on an outer periphery thereof. In addition, the plurality of the core pieces 1 in the stacked state are the rotor core 3 in the present embodiment. The plurality of core pieces 1 in the stacked state, however, may be a block as mentioned above or a stack of the core pieces 1 that is not any of the rotor core 3 and the block.

Further, the positioning method is applicable for the other types of iron core pieces as long as those are provided with engagement portions on inner peripheries or outer peripheries to be allowed to be engaged in a circumferential direction. A shape of the engagement portion is not limited to the projected portion in the radial direction like the key portion 9, and may be a recessed portion. In the case of the recessed portion, the fixed contact portion 13 and the rotary contact portion 15 may be rotated relatively in the recessed portion being the engagement portion.

The positioning method of the present embodiment installs and locates the fixed contact portion 13 and the rotary contact portion 15 as the first and the second contact portions into the center hole 5 of the rotor core 3. With this, the fixed contact portion 13, the rotary contact portion 15, and the plurality of the core pieces 1 are positioned concentrically.

In this state, the fixed contact portion 13 and the rotary contact portion 15 become contactable the key portion 9, respectively. Namely, at least parts of the fixed contact portion 13 and the rotary contact portion 15 are located on the same virtual circle as the key portion 9.

In addition, in FIG. 3, the fixed contact portion 13 is in contact with one side of the key portions 9 of the uppermost core piece 1. The core piece 1 of the lower layer, however, may be in contact with the fixed contact portion 13 according to the phase deviation state. Namely, the fixed contact portion 13 is in contact with the key portion 9 located on furthest one side in the circumferential direction according to the deviation of the plurality of the core pieces 1.

Then, the fixed contact portion 13 and the rotary contact portion 15 are rotated coaxially relative to each other, to be respectively brought into contact with the one sides and the other sides of the key portions 9 of the plurality of the core pieces 1 in the circumferential direction. In the present embodiment, the rotary contact portion 15 rotates relative to the fixed contact portion 13 that is fixed in the circumferential direction. Both the first and the second contact portions, however, may be rotary contact portions.

With the rotating, the rotary contact portion 15 is relatively rotated toward the fixed contact portion 13, one side face 13a of the fixed contact portion 13 receives the one sides of the key portions 9 in the circumferential direction, and one side face 15a of the rotary contact portion 15 push the key portions 9 that involve the phase deviation in a rotational direction.

Thus, in the state that the one side face 13a of the fixed contact portion 13 is brought into contact with the one sides of the key portions 9 in the circumferential direction, the one side face 15a of the rotary contact portion 15 is brought into contact with the other sides of the same as illustrated in FIG. 4. Accordingly, the fixed contact portion 13 and the rotary contact portion 15 align the phases of the plurality of the core pieces 1 so as to hold the key portions 9 in the circumferential direction. It should be noted that the phases of the key portions 9 may be aligned between the other side faces 13b and 15b.

As long as the fixed contact portion 13 and the rotary contact portion 15 are respectively contactable with the one sides and the other sides of the key portions 9 of the plurality of the core pieces 1 in the circumferential direction, the fixed contact portion and the rotary contact portion may employ various shapes such as a columnar shape, a wall shape, and a rod shape spanning over the axially entire rotor core 3.

The fixed contact portion 13 and the rotary contact portion 15 of the present embodiment have columnar shapes with sector sectional shapes, and are provided with the one side faces 13a and 15a or the other side faces 13b and 15b being contactable with the one side and the other side of the key portion 9. The one side faces 13a and 15a and the other side faces 13b and 15b are planes along the radial direction and the axial direction. The one side faces 13a and 15a and the other side faces 13b and 15b are not limited in shape as long as the one side faces and the other side faces are contactable with the one sides and the other sides of the key portions 9.

Two rotary contact portions 15 are provided corresponding to both the key portions 9 of each rotor piece 1. These rotary contact portions 15 are coupled to a shaft portion 23 serving as a center of the relatively rotating. Although the shaft portion 23 should allow the rotary contact portions 15 to be coupled, the shaft portion is a columnar body having a circular cross section in the present embodiment. Alternatively, the shaft portion 23 may be omitted.

Two fixed contact portions 13 are disposed around the shaft portion 23 in correspondence with both the key portions 9 of each rotor piece 1. An inner face 25 of the fixed contact portion 13 in the radial direction is formed in an arc sectional shape, to allow the shaft portion 23 to be relatively rotated. It should be noted that the fixed contact portion 13 and the rotary contact portion 15 may be provided only for one key portion 9.

The fixed contact portion 13 and the rotary contact portion 15 are installed to the rotor core 3 that is the plurality of the stacked core pieces 1 to be disposed in the center hole 5 of the rotor core 3. Namely, the fixed contact portion 13 and the rotary contact portion 15 are disposed and installed in the center hole 5, thereby being easily set.

With this disposition, the plurality of the core pieces 1 are positioned in the radial direction if the fixed contact portions 13 and the rotary contact portions 15 are configured to be fitted into the center hole 5 with no gap. In addition, the radially positioning of the plurality of the core pieces 1 may not be performed. Then, the fixed contact portions 13 and the rotary contact portions 15 rotate relatively coaxially in a state that the fixed contact portions and the rotary contact portions are disposed in the center hole 5 of the rotor core 3. It is, therefore, possible to cause the fixed contact portions 13 and the rotary contact portions 15 to be stably relatively rotated while positioning the core pieces 1 in the radial direction.

An outer peripheral face 19 of the fixed contact portion 13 and an outer peripheral face 21 of the rotary contact portion 15 of the present embodiment have the same curvature as a curvature of the center hole 5. A diameter between the outer peripheral faces 19 and a diameter between the outer peripheral faces 21 are formed to be equal to or smaller than of the center hole 5 of the core piece 1. If the diameter between the outer peripheral faces 19 and the diameter between the outer peripheral faces 21 are equal to of the center hole 5 of the core piece 1, the positioning in the radial direction is performed. In addition, if the diameter between the outer peripheral faces 19 and the diameter between the outer peripheral faces 21 are smaller than the diameter of the center hole 5 of the core piece 1, shapes of the outer peripheral face 19 and the outer peripheral face 21 may be arbitrarily set as long as the fixed contact portion 13 and the rotary contact portion 15 are relatively rotatable in the center hole 5.

The fixed contact portions 13 and the rotary contact portions 15 are provided as a jig 17 capable of being handled integrally.

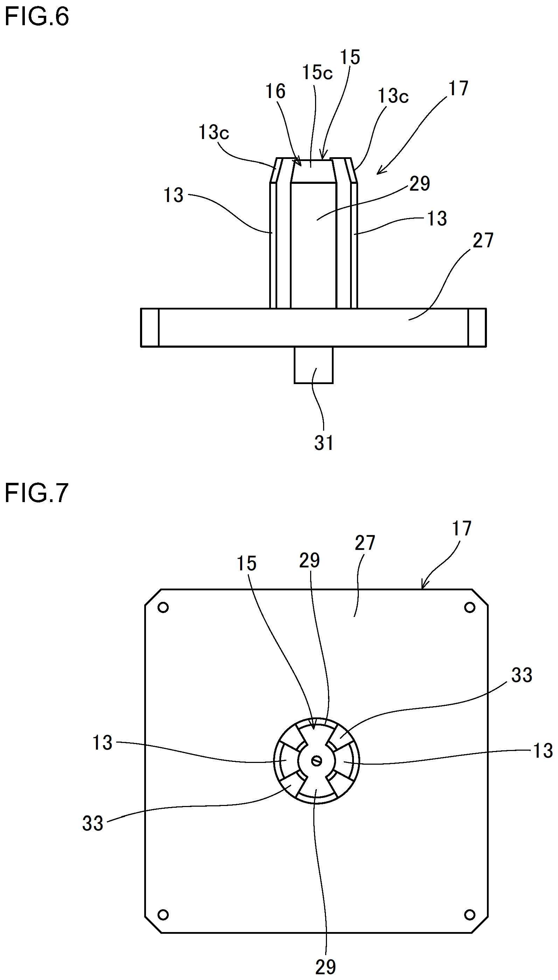

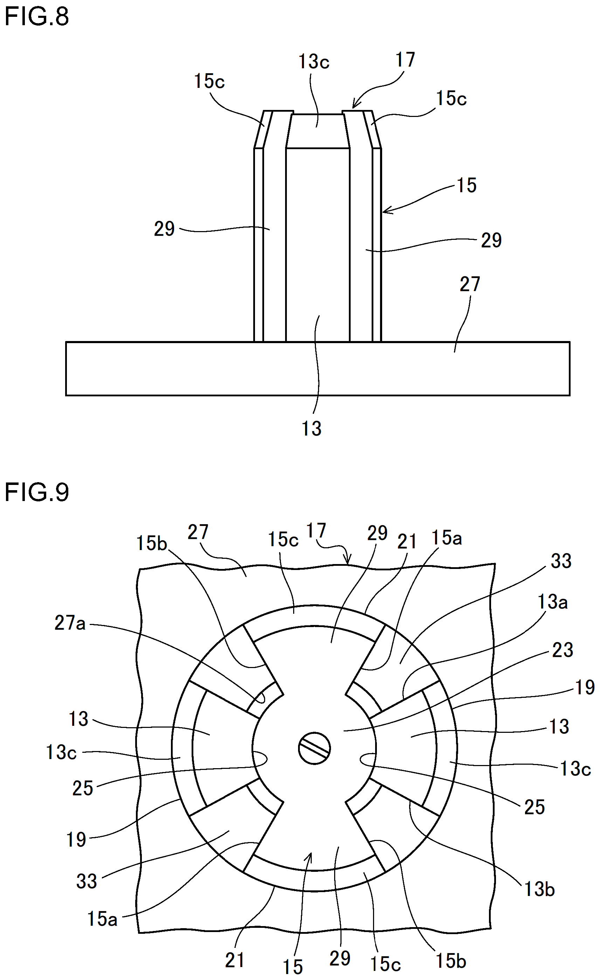

FIG. 5 is a perspective view of the jig of FIG. 3, and FIG. 6 is a front view of the same. FIG. 7 is a plan view of the same. FIG. 8 is an enlarged side view illustrating part of the jig of FIG. 5. FIG. 9 is an enlarged plan view illustrating part of the jig of FIG. 5.

As illustrated in FIGS. 5 to 8, the jig 17 is provided with a base plate 27, the fixed contact portions 13 and the rotary contact portions 15 mentioned above.

The base plate 27 is a plate body. Although a planar shape of the base plate 27 may be appropriately set, the planar shape is formed in a chamfered square shape in a plan view in the present embodiment. In the base plate 27, a through hole 27a is formed on a central portion. The fixed contact portions 13 and the rotary contact portions 15 are supported by the base plate 27.

The fixed contact portion 13 is provided around the shaft portion 23 of the rotary contact portion 15. In the present embodiment, the pair of the fixed contact portions 13 are provided so as to face each other in the radial direction across the shaft portion 23. The fixed contact portions 13 are fixed so as to stand from the base plate 27, respectively.

The shaft portion 23 is concentrically fitted between the inner faces 25 of the fixed contact portions 13, and is relatively rotatable with respect to the fixed contact portions 13. A drive shaft 31 is integrally formed at an end portion of the shaft portion 23. The drive shaft 31 is projected from the through hole 27a of the base plate 27 to an outside of the base plate 27. The drive shaft 31 is connected to a drive actuator (not illustrated) such as an electric motor for alignment, so that rotational drive of the rotary contact portions 15 is controlled.

The rotary contact portion 15 has substantially the same shape as the fixed contact portion 13, and are provided symmetrically about the shaft portion 23 in the radial direction. The rotary contact portions 15 are formed integrally with the shaft portion 23 at the center and are set to be lower than the fixed contact portions 13.

Inclined faces 13c and 15c are formed on outer peripheries of tip portions of the fixed contact portions 13 and the rotary contact portions 15. The inclined faces 13c and 15c form one tapered face 16 as a whole.

As illustrated in FIG. 3, a space portion 33 is provided between the fixed contact portion 13 and the rotary contact portion 15 at an initial position in which the other side face 15b of the rotary contact portion 15 is brought into contact with the other side face 13b of the fixed contact portion 13. The space portion 33 enables the relatively rotating between the fixed contact portion 13 and the rotary contact portion 15 while arranging the key portions 9 between the fixed contact portion and the rotary contact portion in the circumferential direction when the fixed contact portion 13 and the rotary contact portion 15 are disposed in the center hole 5.

At the time of positioning for aligning the phases of the core pieces 1, the fixed contact portions 13 and the rotary contact portions 15 of the jig 17 are inserted into the center hole 5 of the rotor core 3 as illustrated in FIG. 3, and the key portions 9 are disposed between the fixed contact portion 13 and the rotary contact portion 15 in the circumferential direction in the space portion 33.

At this time, the inserting to the center hole 5 of the rotor core 3 is easily conducted by the tapered face 16 of the fixed contact portions 13 and the rotary contact portions 15.

With this inserting, the core pieces 1 are positioned in the radial direction if the outer peripheral faces 19 and 21 of the fixed contact portions 13 and the rotary contact portions 15 are fitted into the center hole 5.

Then, rotating the drive shaft 31 using the electric motor, the rotary contact portions 15 coaxially rotates relative to the fixed contact portions 13 as mentioned above, to align the phases of the key portions 9 of the plurality of the core pieces 1 in the circumferential direction.

At this time, the present embodiment, as illustrated in FIG. 4, holds the one sides and the other sides of the key portions 9 in the circumferential direction between the fixed contact portion 13 and the rotary contact portion 15 in the circumferential direction so that the one side face 13a of the fixed contact portion 13 and the one side face 15a of the rotary contact portion 15 are respectively brought into contact with the one sides and the other sides of the key portions. When the drive torque of the drive actuator for driving the drive shaft 31 reaches a predetermined value according to the holding, drive control of the drive actuator is stopped.

Thus, the drive torque of the drive shaft 31 is controlled, thereby to surely set the phases of the plurality of the core pieces 1 between the fixed contact portion 13 and the rotary contact portion 15.

### EMBODIMENT 2

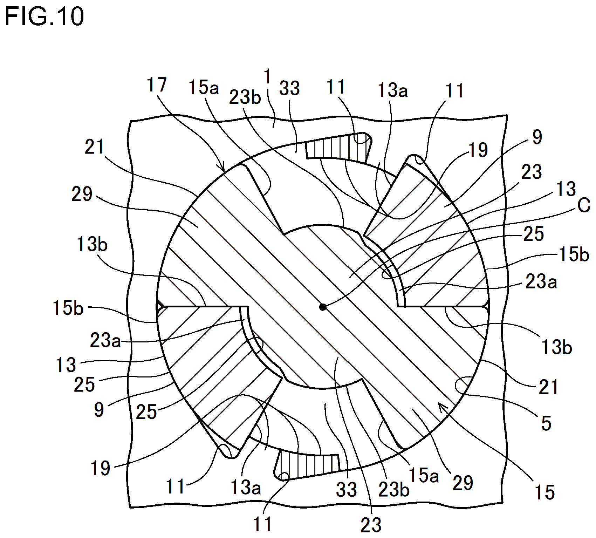

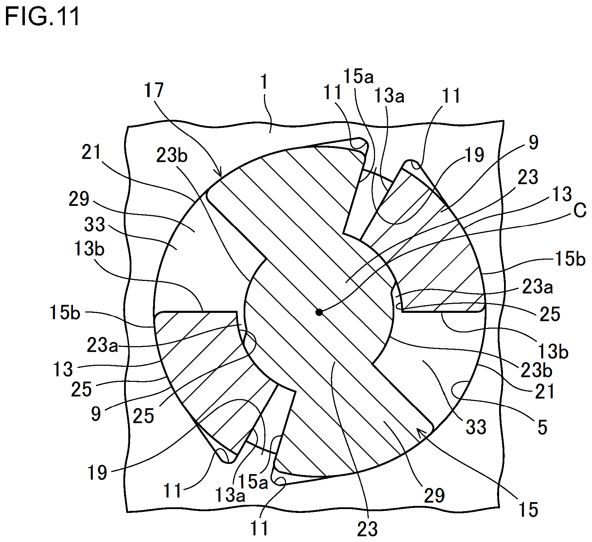

FIG. 10 is an enlarged plan view illustrating a center hole and its periphery of a rotor core in which a jig is installed according to the embodiment 2 of the present invention. FIG. 11 is an enlarged plan view illustrating the center hole and its periphery of the rotor core in a positioning state according to the embodiment 2 of the present invention. In addition, the embodiment 2 is in common with the embodiment 1 in the basic structure and components being the same as or corresponding to of the embodiment 1 are represented with the same reference numerals, to omit redundant description. In FIGS. 10 and 11, the fixed contact portions 13 and the rotary contact portions 15 are indicated by hatching for ease of understanding.

A positioning method of the embodiment 2 of the present invention positions the plurality of the stacked core pieces 1 in the radial direction using the outer peripheral faces 19 of the fixed contact portions 13 being the other of the first and the second contact portions according to a circumferential shape of a shaft portion 23.

The fixed contact portions 13 are configured to be movable along the radial direction with respect to the base plate 27 that is not illustrated. For example, the fixed contact portions 13 may be formed separately from the base plate 27, and guides such as guide grooves or guide rails in the radial direction may be formed on the base plate 27 for the fixed contact portions 13.

This movement in the radial direction is set in a range to keep the contact of the one side face 13a of the fixed contact portion 13 with respect to the one sides of the key portions 9. Namely, part of the fixed contact portion 13 and part of the key portions 9 are located on the same virtual circle.

The outer peripheral face 23a of the shaft portion 23 is provided with contactable portion 23b. In the present embodiment, the pair of the contactable portions 23b are provided symmetrically in the radial direction. The contactable portion 23b is a portion in which a diameter is enlarged with respect to the outer peripheral face 23a. The diameter between surfaces of both the contactable portions 23b corresponds to the diameter between the inner faces 25 of the fixed contact portions 13, and for example, these diameters are substantially the same diameter so that the surfaces of both the contactable portions 23b are contactable with the respective inner faces 25 of the fixed contact portions 13.

These contactable portions 23b come into contact with the inner faces 25 of the fixed contact portions 13 according to circumferential positions of the rotary contact portions 15 with respect to the fixed contact portions 13 based on the relatively rotating of the rotary contact portions. Gaps are formed between the outer peripheral faces 23a of the shaft portion 23 and the inner faces 25 of the fixed contact portions 13 within a range to maintain the contact.

These gaps facilitate insertion of the fixed contact portions 13 and the rotary contact portions 15 into the center hole 5 of the rotor core 3. Then, at the time of positioning for aligning phases of the rotor pieces 1, the contactable portions 23b of the shaft portion 23 are pressed against the inner faces 25 of the fixed contact portions 13 according to the relatively rotating of the rotary contact portions 15 with respect to the fixed contact portions 13. With the pressing, the fixed contact portions 13 are pressed against the inner peripheries of the center holes 5 of the core pieces 1 in the radial direction, to position the core pieces 1 in the radial direction as illustrated in FIG. 11.

In addition, the embodiment 2 also provides the same effects as those of the embodiment 1.

### DESCRIPTION OF NUMERALS

- 1: Core piece (Iron core piece)
- 3: Rotor core (Stacked iron core)
- 5: Central hole
- 9: Key portion (Engagement portion)
- 13: Fixed contact portion (First contact portion)
- 13a: One side face
- 13b: Other side face
- 15: Rotary contact portion (Second contact portion)
- 15a: One side face
- 15b: Other side face
- 17: Jig
- 19: Outer peripheral face of fixed contact portion
- 21: Outer peripheral face of rotary contact portion
- 27: Base plate
- 27a: Through hole
- 33: Space portion

## Claims

1. A positioning method for aligning phases of a plurality of iron core pieces in a stacked state, the iron core pieces including engagement portions in a circumferential direction, comprising:
relatively rotating a first contact portion and a second contact portion being respectively contactable with one sides and the other sides of the engagement portions in the circumferential direction;
relatively moving the engagement portions in the circumferential direction between the first and the second contact portions by the relatively rotating; and
respectively bringing the first and the second contact portions into contact with the one side and the other side of the engagement portion of each iron core piece in the circumferential direction, to hold the engagement portions between the first and the second contact portions to align the phases of the plurality of the iron core pieces stacked.

2. The positioning method according to claim 1, wherein
the first and the second contact portions are provided so as to be coaxially rotatable relative to each other, and
the first and the second contact portions are installed in the plurality of the iron core pieces, and are relatively coaxially rotated to be respectively brought into contact with the one sides and the other sides of the engagement portions in the circumferential direction.

3. The positioning method according to claim 2, wherein
the iron core pieces include center holes in which the engagement portions are projected inward in a radial direction, and
the first and the second contact portions perform the relatively rotating in a state of being fitted into the center holes.

4. The positioning method according to claim 3, wherein
one of the first and the second contact portions is coupled to a shaft portion serving as a center of the relatively rotating, and
the other of the first and the second contact portions is disposed around the shaft portion, is movable along the radial direction within a range to allow the contact, and is pressed against the central holes of the plurality of the stacked iron core pieces to position the plurality of the iron core pieces in the radial direction based on a shape of the shaft portion in the circumferential direction according to the relatively rotating.

5. A jig for aligning phases of a plurality of iron core pieces in a stacked state, the iron core pieces including engagement portions in a circumferential direction and central holes, comprising:
a first and a second contact portions disposed so as to be coaxially rotatable relative to each other and fitted in the central holes of the plurality of the stacked iron core pieces in the axial direction; and
a space portion to allow the relatively rotating of the first and the second contact portions while the engagement portions are disposed between the first and the second contact portions in the circumferential direction.

6. The jig of claim 5, wherein
one of the first and the second contact portions is coupled to a shaft portion serving as a center of the relatively rotating, and
the other of the first and the second contact portions is disposed relatively rotatably around the shaft portion.

7. The jig of claim 6, wherein
the other of the first and the second contact portions is movable along a radial direction within a range to maintain the contact,
the shaft portion is provided with a contactable portion that comes into contact with an inner side of the other of the first and the second contact portions in the radial direction according to the relatively rotating, and
the other of the first and the second contact portions is pressed against the center holes of the plurality of the stacked iron core pieces on account of the contactable portion to position the plurality of the iron core pieces in the radial direction according to the relatively rotating.
